# EUROPEAN PATENT APPLICATION

(11) **EP 4 624 045 A1**
(43) Date of publication of application: **01.10.2025**
(21) Application number: 24167653.5
(22) Date of filing: 28.03.2024
(51) Int. Cl.: B01J 29/70, B01D 53/94, B01J 35/64, B01J 37/00, B01J 37/02

(54) **METHOD OF FORMING AN INORGANIC OXIDE COATING ON A MONOLITH ARTICLE**

(71) Applicant: Johnson Matthey Public Limited Company, London EC2V 7AD (GB)
(72) Inventor: TURNER, John, Royston, SG8 5HE (GB); WARREN, Sarah, Royston, SG8 5HE (GB); GREEN, Alexander, Royston, SG8 5HE (GB)
(74) Representative: Boult Wade Tennant LLP

(57) **Abstract**

A method of forming an inorganic oxide coating on a monolith article is disclosed. The coated monolith article is suitable for treatment of an exhaust gas. The method comprises spraying, as a dry particulate aerosol, inorganic particles comprising an aluminosilicate zeolite having a mean pore diameter Dv50 of between 0.5 and 3.0 µm and a silicone resin to form a coating layer. The present invention also provides an uncalcined porous monolith article for use in forming a monolith article for the treatment of an exhaust gas. The uncalcined monolith article comprises a dry particulate composition comprising inorganic particles comprising an aluminosilicate zeolite having a mean pore diameter Dv50 of between 0.5 and 3.0 µm and a silicone resin.

## Description

### FIELD OF THE INVENTION

The present invention relates to a method of forming an inorganic oxide coating on a monolith article. In particular, the coated monolith article is suitable for the treatment of an exhaust gas. More particularly, the method comprises spraying, as a dry particulate aerosol, inorganic particles and a silicone resin to form a coating layer. The present invention also relates to an uncalcined porous monolith article for use in forming a monolith article for the treatment of an exhaust gas. In particular, the uncalcined monolith article comprises a dry particulate composition comprising inorganic particles and a silicone resin.

### BACKGROUND OF THE INVENTION

There are concerns about emissions of particulate matter (PM), commonly referred to as soot, from internal combustion engines and especially from diesel and gasoline engines in automotive applications. The main concerns are associated with potential health effects, and in particular with very tiny particles having sizes in the nanometer range.

Diesel particulate filters (DPFs) and gasoline particulate filters (GPFs) have been fabricated using a variety of materials including sintered metal, ceramic or metal fibers etc., with the most common type in actual mass production being the wall-flow kind made from porous ceramic material fabricated in the form of a monolithic array of many small channels running along the length of the body. Alternate channels are plugged at one end so the exhaust gas is forced through the porous ceramic channel walls that prevent most of the particulate from passing through so only filtered gas enters the environment. Ceramic wall-flow filters in commercial production include those made from cordierite, various forms of silicon carbide and aluminum titanate. The actual shape and dimensions of practical filters on vehicles as well as properties such as the channel wall thickness and its porosity etc. depend on the application concerned. The average dimensions of the pores in the filter channel walls of a ceramic wall-flow filter through which the gas passes are typically in the range 5 to 50 µm and usually about 20 µm. In marked contrast, the size of most diesel particulate matter from a modern passenger car high speed diesel engine is very much smaller, e.g. 10 to 200 nm.

Some PM may be retained within the pore structure in the filter walls and this may in some applications gradually build up until the pores are bridged over by a network of PM and this PM network then enables the easy formation of a cake of particulate on the internal walls of the filter channels. The particulate cake is an excellent filter medium and its presence affords very high filtration efficiency. In some applications soot is burned continuously on the filter as it is deposited which prevents a particulate cake from building up on the filter.

For some filters, for example light duty diesel particulate filters, it is necessary to remove trapped PM periodically from the filter to prevent the build-up of excessive back pressure that is detrimental to engine performance and can cause poor fuel economy. So in diesel applications, retained PM is removed from the filter by burning it in air in a process during which the amount of air available and the amount of excess fuel used to achieve the high temperature needed to ignite the retained PM are very carefully controlled. Towards the end of this process, that is usually called regeneration, the removal of the last remaining particulate in the filter can lead to a marked decrease in filtration efficiency and release of a burst of many small particles into the environment. Thus, filters may have low filtration efficiency when they are first used and subsequently after each regeneration event and also during the latter part of each regeneration process.

Thus, it would be desirable to improve and/or maintain filtration efficiency at all times - for example during the early life of a filter when it is first used, and or during regeneration and immediately afterwards, and or when the filter is loaded with soot.

WO2011151711A1 (the entire contents of which is incorporated herein by reference) describes a method of making a filter for filtering particulate matter from exhaust gas emitted from a lean-burn internal combustion engine. The filter comprises a porous substrate having inlet surfaces and outlet surfaces, wherein the inlet surfaces are separated from the outlet surfaces by a porous structure containing pores of a first mean pore size. The inlet surfaces comprise a bridge network comprising interconnected particles of refractory material over the pores of the porous structure. The method comprises the step of contacting inlet surfaces of the filter substrate with an aerosol comprising refractory material in dry powder form.

WO2021028692A1 (the entire contents of which is incorporated herein by reference) describes a vehicular exhaust filter comprising a porous substrate having an inlet face and an outlet face, the porous substrate comprising inlet channels extending from the inlet face and outlet channels extending from the outlet face; the inlet channels and the outlet channels being separated by a plurality of filter walls having a porous structure; the vehicular exhaust filter being loaded with a refractory powder having a tapped density before loading of less than 0.10 g/cm³; the vehicular exhaust filter having a mass loading of the refractory powder of less than 10 g/L; and wherein greater than 40% of the refractory powder is located within the porous structure of the plurality of filter walls and less than 60% of the refractory powder is coated on an external surface of the plurality of filter walls. WO2021/028692 also describes suitable methods and apparatus for the spraying of a dry refractory powder, such as a dry particulate aerosol, onto the channels of a porous substrate, preferably wherein greater than 50% of the refractory powder, optionally up to 100% of the refractory powder, may be located with the porous structure of the plurality of filter walls.

WO2020047708A1 discloses articles comprising porous bodies, such as porous ceramic honeycomb bodies comprising a material such as a filtration material, for example, a porous inorganic layer disposed on at least a portion of the porous body, and methods for making such articles and porous bodies. The methods comprise contacting an inorganic material in a suspension with a gaseous carrier fluid, the suspensions may be aqueous-based or organic-based, for example, an alcohol such as ethanol or methanol.

WO2023026022A1 discloses a method of forming an inorganic oxide coating on a monolith article for the treatment of an exhaust gas, the method comprising: providing a porous monolith article comprising a plurality of channels for the passage of an exhaust gas, each channel having a gas-contacting surface; spraying onto the gas-contacting surface, as a dry particulate aerosol, inorganic particles and a silicone resin to form a coating layer; and calcining the coating layer to provide a coated monolith article

The present invention provides an improved method for the production of a more efficient coated monolith article which demonstrates improved filtration efficiencies and improved thermal stability.

### SUMMARY OF THE INVENTION

According to a first aspect of the present invention, there is provided a method of forming an inorganic oxide coating on a monolith article for the treatment of an exhaust gas, the method comprising:
providing a porous monolith article comprising a plurality of channels for the passage of an exhaust gas, each channel having a gas-contacting surface;
spraying onto the gas-contacting surface, as a dry particulate aerosol, inorganic particles comprising an aluminosilicate zeolite having a mean pore diameter Dv50 of between 0.5 and 3.0 µm and a silicone resin to form a coating layer; and
calcining the coating layer to provide a coated monolith article.

In another aspect, there is provided a coated monolith article for the treatment of an exhaust gas obtainable by the method as described herein in respect of the first aspect.

In a further aspect of the present invention, there is provided a vehicular exhaust system comprising the coated monolith article as described herein.

In another aspect, there is provided an uncalcined porous monolith article for use in forming a monolith article for the treatment of an exhaust gas, the uncalcined porous monolith article comprising a plurality of channels and comprising a dry particulate composition comprising inorganic particles comprising an aluminosilicate zeolite having a mean pore diameter Dv50 of between 0.5 and 3.0 µm and a silicone resin, the dry particulate composition being located within the channels and/or pores of said uncalcined porous monolith.

In another aspect, there is provided an uncalcined porous monolith article for use in forming a monolith article for the treatment of an exhaust gas, the monolith article obtainable by a method comprising:
providing a porous monolith article comprising a plurality of channels for the passage of an exhaust gas, each channel having a gas-contacting surface;
spraying onto the gas-contacting surface, as a dry particulate aerosol, inorganic particles comprising an aluminosilicate zeolite having a mean pore diameter Dv50 of between 0.5 and 3.0 µm and a silicone resin to form a coating layer.

### DETAILED DESCRIPTION OF THE INVENTION

According to a first aspect of the present invention, there is provided a method of forming an inorganic oxide coating on a monolith article for the treatment of an exhaust gas, the method comprising:
providing a porous monolith article comprising a plurality of channels for the passage of an exhaust gas, each channel having a gas-contacting surface;
spraying onto the gas-contacting surface, as a dry particulate aerosol, inorganic particles having a SAR of greater than 100:1 and a silicone resin to form a coating layer; and
calcining the coating layer to provide a coated monolith article.

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The method of the present invention forms an inorganic oxide coating on a monolith article thereby forming a coated monolith article. The monolith article having an inorganic oxide coating is suitable for use in treating an exhaust gas. An exhaust gas may be a lean-burn exhaust gas, preferably from an engine of a vehicle and the exhaust gas is treated by passing the exhaust gas through the channels of the monolith article thereby contacting the exhaust gas with the gas-contacting surface of the plurality of channels.

The method comprises providing a porous monolith article comprising a plurality of channels for the passage of an exhaust gas, each channel having a gas-contacting surface. Porous monolith articles are well-known in the art. Porous monolith articles may sometimes be referred to as substrates, preferably honeycomb substrates, preferably ceramic honeycomb substrates. Such substrates comprise a plurality of channels which are suitable for the passage of an exhaust gas. The channels are parallel and run from an inlet end (or a first end) to an outlet end (or a second end), i.e., the channels run axially through the article. Typically, the channels have a square cross-section though any known monolith design may be employed.

The porous monolith article/substrate may be formed, for example, from sintered metal, ceramic or metal fibers, etc. For example, the article may be formed from cordierite, various forms of silicon carbide or aluminum titanate.

In some embodiments, the monolith article is a monolith filter. It is particularly preferred that the monolith filter is a wall-flow filter (which may also be known as a wall-flow monolith article). A wall-flow filter is well-known and typically, adjacent channels are alternatively plugged at each end of the monolith article such that, in use, the exhaust gas passes along an inlet channel (i.e., a channel open at an inlet end of the monolith article for receiving an exhaust gas) and is forced to pass through the channel walls an into an adjacent outlet channel (i.e., a channel open at an outlet end of the monolith article).

The channel walls have a distribution of fine pores providing the monolith article with the required porosity, the average dimensions of the pores in the channel walls, e.g., the filter walls, are typically in the range from 5 to 50 µm. Each channel has a gas-contacting surface. That is, each channel has a surface suitable for contacting, for example, an exhaust gas when in use. The surface may be provided by the channel wall surface and/or by the pores contained therein.

In another particularly preferred embodiment, the porous monolith article is a catalyst article (i.e., a catalytic filter). Catalytic porous monolith articles are well-known and exhibit a catalytic function such as oxidation, NOₓ-trapping, or selective catalytic reduction activity. The porous monolith article may comprise one or more washcoats, preferably catalytic washcoats. A washcoat is a composition that coats and permeates the porous structure of the article. The article comprising said one or more washcoats is preferably then calcined prior to spraying the inorganic particles and silicone resin onto the channels as described herein. The catalyst article can therefore be selected from a three-way catalyst (TWC), NOₓ absorber, oxidation catalyst, selective reduction catalyst (SCR), hydrocarbon trap and a lean NOₓ catalyst, for example. The catalyst article may contain one or more platinum group metals, particularly those selected from the group consisting of platinum, palladium, and rhodium.

In another particularly preferred embodiment, the porous monolith article is a catalytic wall-flow filter. Consequently, the article may, for example, be a catalyzed soot filter (CSF), a selective catalytic reduction filter (SCRF), a lean NOₓ trap filter (LNTF), a gasoline particulate filter (GPF), an ammonia slip catalyst filter (ASCF) or a combination of two or more thereof (e.g., a filter comprising a selective catalytic reduction (SCR) catalyst and an ammonia slip catalyst (ASC).

In another particularly preferred embodiment, the porous monolith article is a gasoline particulate filter (GPF), which is a catalytic wall-flow filter comprising a TWC catalyst. Generally, gasoline particulate filter comprises a platinum group metal selected from the group consisting of Pt, Pd, Rh and mixtures thereof; an oxygen storage capacity (OSC) material; and optionally an inorganic support material.

The shape and dimensions of the filter, for example properties such as the channel wall thickness and its porosity etc. may be varied depending on the intended application for the filter. The filter may be configured for use with an internal combustion engine to filter the exhaust gas emitted by the internal combustion engine. The internal combustion engine may be a gasoline spark ignition engine. However, the filter finds particular application when configured for use with an internal combustion engine in the form of a diesel or gasoline engine.

The wall-flow filter may be an asymmetric wall-flow filter. Asymmetric wall-flow filter designs are known, for example, from WO 2005030365A1, which discloses a honeycomb filter including an array of interconnecting porous walls which define an array of first channels and second channels. The first channels are bordered on their sides by the second channels and have a larger hydraulic diameter than the second channels. The first channels have a square cross-section, with corners of the first channels having a shape such that the thickness of the porous walls adjoining the corners of the first channels is comparable to the thickness of the porous walls adjoining edges of the first and second channels. In use, the first channels having the larger hydraulic diameter are oriented to the upstream side. Society of Automotive Engineers SAE Technical Paper Series 2007-01-0656 explains that: "There is a pressure drop penalty [for a catalyzed asymmetric cell technology (ACT) wall flow filter] in the clean state for the ACT design due to the contraction and expansion of gases at the filter channel inlet and outlet. However, a filter spends very little time in a totally clean (fully regenerated) state while in operation on a vehicle." WO2005030365A1 also explains that the advantages of the asymmetric filter design include increased effective surface area available for collecting soot and ash particles in the inlet portion of the honeycomb filter, thus increasing the overall storage capacity of the honeycomb filter. Common general knowledge textbook "Catalytic Air Pollution Control - Commercial Technology", 3rd Edition, Ronald M. Heck et al, John Wiley & Sons, Inc. Hoboken, N.J., USA (2009) pp. 338-340 explains that: "Such a [asymmetric filter] channel design enables higher ash storage capacity combined with lower ash-loaded back pressure due to larger hydraulic diameter and higher open volume at inlet. The ACT design also helps preserve the mechanical and thermal durability of the filter".

The method further comprises spraying onto the gas-contacting surface, as a dry particulate aerosol, the inorganic particles comprising an aluminosilicate zeolite having a mean pore diameter Dv50 of between 0.5 and 3.0 µm and a silicone resin to form a coating layer. The method therefore comprises spraying a dry powder (i.e., dry particles) suspended in a gas (i.e., as an aerosol) onto the gas-contacting surface of the plurality of channels on the monolith article. The spraying of dry powders onto monolith articles is known in the art. Suitable methods and apparatus are described in, for example, WO2011151711A1 and WO2021028692A1.

The present inventors have discovered that that by combining inorganic particles comprising an aluminosilicate zeolite having a Dv50 of between 0.5 and 3.0 µm and a silicone resin in the dry powder for forming a dry particle aerosol, the resulting article exhibits remarkably improved adhesion of the inorganic particles to the surfaces of the channels walls, and improved thermal stability of the coated monolith article.

The Dv50, Dv10, Dv90 are parameters to evaluate the particle size of a powder material. For example, if the Dv50 of a sample is 5 µm by volume distribution, it means that the volume of particles less than 5 µm accounts for 50% of the total sample volume, and likewise, the volume of particles greater than 5 µm is also 50%. Similarly, if the Dv90 of a sample is 5 µm by volume distribution, it means that the volume of particles less than 5 µm accounts for 90% of the total sample volume, and likewise, the volume of particles greater than 5 µm is 10%. If the Dv10 of a sample is 5 µm by volume distribution, it means that the volume of particles less than 5 µm accounts for 10% of the total sample volume, and likewise, the volume of particles greater than 5 µm is 90%.

One advantage of the present invention is that the coated monolith articles, such as filters that contain catalyst in the filter walls, can be treated after a catalyst is supported on the filter and so that the inorganic coating does not interfere with the catalyst in and/or on the filter walls. Moreover, the inventors have found that a silicone resin as described herein does not require high temperature processing that might be detrimental to the catalyst enabling the inorganic particles to be more effectively retained and adhered to the article channels.

Silicone resins are known and are branched, cage-like oligosiloxanes and polysiloxanes. The branching in silicone resins results from the presence of so called "T" and/or "Q" units in the resin which refer to RSiO₃ and SiO₄ units (R is an alkyl or aryl group), respectively, wherein further silicon units are bonded to the oxygen atoms. "M" units, i.e., R₃SiO unit are terminal units wherein the oxygen atom provides a link to the resin backbone. Similarly, "D" units, i.e., R₂SiO₂ units provide linear connectivity across the two oxygen atoms. One well known non-branched and linear polysiloxane is polydimethylsiloxane (PDMS; i.e., (Me₂SiO)ₙ).

As will be appreciated, the requirement for the inorganic particles and the silicone resin to be sprayed as a dry particulate aerosol requires that the silicone resin is a solid particulate. Accordingly, the silicon resin may be referred to herein as silicone resin particles. Preferably, the silicon resin is a solid at room temperature (e.g., about 25°C). Accordingly, the silicone resin preferably has a melting point of greater than 25°C, preferably greater than 30°C, more preferably greater than 35°C. Preferably, the melting point of the silicone resin is less than 100°C, preferably less than 95°C, less than 90°C, less than 85°C or less than 80°C. Non-branched polysiloxanes such as PDMS typically have lower melting points than silicone resins which are branched. For example, the melting point of PDMS is about -40°C. WO2011151711A1 discloses binding powder in place by treatment with polydimethylsiloxane which forms silica when hydrolysed at sufficiently high temperature.

Similarly, the inventors have found that it is preferable that the silicone resin has a glass transition temperature (Tg) of greater than 30°C, preferably greater than 35°C, and/or less than 100°C, preferably less than 80°C. Without wishing to be bound by theory, the inventors believe that silicone resins which have such melting points and/or glass transition temperatures are particularly suited for the powder coating process, i.e., for effective particulate dispersion across on the monolith article together with the inorganic particles, yet low enough to permit low temperature calcination thereby effectively and efficiently adhering the inorganic particles to the gas-contacting surface of the channel walls.

The inorganic particles comprise an aluminosilicate zeolite having a having a mean pore diameter Dv50 of between 0.5 and 3.0 µm. In some embodiments, the aluminosilicate zeolite has a mean pore diameter Dv50 of between 0.6 and 2.8 µm, between 0.7 and 2.6 µm, between 0.8 and 2.4 µm, between 0.9 and 2.2 µm, between 1.0 and 2.0 µm, between 1.1 and 1.8 µm, or between 1.2 and 1.6 µm.

The aluminosilicate zeolite may have a silica-to-alumina molar ratio (SAR) of less than 400:1. In some embodiments, the aluminosilicate zeolite has an SAR of less than 300:1, less than 200:1, less than150:1, less than 100:1, less than 80:1, or less than 50:1. For example, the aluminosilicate zeolite may have an SAR of between 10 to 200, between 15 to 100, or between 20 to 80.

The aluminosilicate zeolite may have a framework type selected from ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AVL, AWO, AWW, BCT, BEA, BEC, BIK, BOG, BPH, BRE, CAN, CAS, SCO, CFI, SGF, CGS, CHA, CHI, CLO, CON, CZP, DAC, DDR, DFO, DFT, DOH, DON, EAB, EDI, EEI, EMT, EON, EPI, ERI, ESV, ETR, EUO, FAU, FER, FRA, GIS, GIU, GME, GON, GOO, HEU, IFR, IFY, IHW, IRN, ISV, ITE, ITH, ITW, IWR, IWW, JBW, KFI, LAU, LEV, LlO, LIT, LOS, LOV, LTA, LTL, LTN, MAR, MAZ, MEI, MEL, MEP, MER, MFI, MFS, MON, MOR, MOZ, MSO, MTF, MTN, MTT, MTW, MWF, MWW, NAB, NAT, NES, NON, NPO, NPT, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SFW, SGT, SOD, SOS, SSY, STF, STI, STT, TER, THO, TON, TSC, UEI, UFI, UOZ, USI, UTL, VET, Wl, VNI, VSV, WIE, WEN, YUG, ZON, or combinations thereof. In some embodiments, the aluminosilicate zeolite may have a framework type selected from AEI, AFT, AFV, AFX, AVL, BEA, CHA, DDR, EAB, EEI, ERI, FAU, FER, IFY, IRN, KFI, LEV, LTA, LTN, MER, MOR, MWF, MFI, NPT, PAU, RHO, RIE, RTH, SAS, SAT, SAV, SFW, TSC, and UFI. In some embodiments, the aluminosilicate zeolite may have FAU framework type.

The inorganic particles may comprise refractory oxide particles which can be based on an oxide selected from the group consisting of alumina, silica, zirconia, ceria, chromia, magnesia, calcia, titania and mixed oxides of any two or more thereof. Preferably, the refractory oxide particles comprise calcium aluminate, fumed alumina, fumed silica, fumed titania, fumed zirconia, fumed ceria, alumina aerogel, silica aerogel, titania aerogel, zirconia aerogel, ceria aerogel or a mixture thereof. The one or more fumed refractory powders (refractory oxide particles) may be produced by a pyrogenic process, for example flame pyrolysis.

The amount of the aluminosilicate zeolite present in the inorganic particles can be from 10 to 99 wt%, preferably from 50 to 99 wt%, more preferably from 80 to 99 wt%, and most preferably from 90 to 99 wt%. In some embodiments, the inorganic particles consist of the aluminosilicate zeolite.

The silicone resin particles may have a Dv50 of between 0.2 and 50 µm. For example, The silicone resin particles may have a Dv50 of between 0.3 and 40 µm, between 0.4 and 30 µm, or between 0.5 and 20 µm, between 0.6 and 10 µm.

Preferably, the dry particulate aerosol is formed from a dry particulate composition having a tapped density of less than 1.5 g/cm³. The dry particulate composition may be referred to as a dry particulate powder. The dry particulate composition preferably consists of the inorganic particles and/or the silicone resin. In some preferred embodiments, the inorganic particles have a tapped density of less than 0.1 g/cm³ (typically for fumed refractory oxides). In other preferred embodiments, the inorganic particles have a tapped density of greater than 0.1 g/cm³, preferably greater than 0.2 g/cm³. For example, zeolite particles such as Cu-substituted zeolite may preferably have a tapped density of about 0.25 g/cm³. In other preferred embodiments, the inorganic particles, such as refractory oxide particles, may have a tapped density of less than 1.4 g/cm³, preferably less than 1.3 g/cm³, preferably less than 1.2 g/cm³. By way of example only, calcium aluminate may have a tapped density of about 1 g/cm³. Accordingly, the inorganic particles may preferably have a tapped density of from 0.1 g/cm³ to 1.4 g/cm³, preferably from 0.2 g/cm³ to 1.2 g/cm³. The silicon resin particles may have a tapped density of from 0.3 g/cm³ to 0.9 g/cm³, preferably from 0.5 g/cm³ to 0.7 g/cm³. The dry particulate composition consisting of a mixture of the inorganic particles and silicone resin may preferably have the same tapped densities as described for either of the inorganic particles or silicone resin individually. In some preferred embodiments, the tapped density of the dry particulate composition is from 0.5 to 1.4 g/cm³, preferably from 0.7 g/cm³ to 1.2 g/cm³.

In one preferred embodiment, the spraying step comprises a first spraying step wherein the inorganic particles are sprayed onto the gas-contacting surface as a first dry particulate aerosol to form an inorganic particle layer and in a second spraying step the silicone resin is then sprayed onto the inorganic particle layer as a second dry particulate aerosol to form the coating layer. Accordingly, the inorganic particles are sprayed onto the channels of the monolith article before the silicon resin is separately sprayed on the channel coated with the inorganic particles.

Even more preferably, a mixture of the inorganic particles and silicone resin is sprayed onto the gas-contacting surface as a dry particulate aerosol to form the coating layer. Accordingly, an intimate mixture of the inorganic particles and silicone resin is coated onto the gas-contacting surface of the channels and provides enhanced adhesion of the inorganic particles to the channel walls upon calcination of the silicone resin.

Where a mixture of the inorganic particles and silicone resin is sprayed onto the gas-contacting surface as a dry particulate aerosol to form the coating layer (preferably wherein the dry particulate composition consists of the inorganic particles and silicone resin), in the mixture, the ratio of inorganic particles to silicone resin, by weight, is preferably greater than 0.5 (in other words greater than 0.5:1), preferably greater than 0.7, preferably greater than 0.9, and/or less than 4, preferably less than 3, preferably less than 2.5. For example, the ratio may preferably be about 1 or about 2. Preferably, the ratio is from 0.5 to 4, preferably from 0.7 to 3, preferably from 0.9 to 2.5, preferably from 1 to 2.

Preferably, the silicone resin has a molecular weight of greater than 1,000, preferably greater than 2,000, preferably greater than 5,000, preferably greater than 10,000, and/or a molecular weight of less than 500,000, preferably less than 200,000.

As used herein, molecular weight refers to the weight average molecular weight (Mw) which may be measured using any conventional means in the art. In some embodiments, particularly those described herein wherein the silicone resin comprises hydroxy functionalities, the molecular weight may be relatively low since the hydrogen bonding provided by the hydroxy functionalities provides the silicone resin with a sufficiently high melting point and/or glass transition temperature. Accordingly, in some embodiments the molecular weight of the silicon resin may be from 1,000 to 10,000, preferably from 1,000 to 5,000, preferably from 1,200 to 3,500, such as from 1,500 to 2,000. Silicone resins having molecular weights below 1,000 are less preferred since they are typically either liquid and not suitable for dry spraying or do not have as much branching as larger molecules which is believed to provide enhanced binding of the inorganic particles to the monolith article.

Nevertheless, the molecular weight of the silicone resin may preferably be from 15,000 to 150,000, preferably from 20,000 to 120,000, preferably from 60,000 to 100,000. Some preferable resins have an Mw of from 8,000 to 15,000, some from 20,000 to 60,000 and others from 80,000 to 120,000.

It is particularly preferred that the silicone resin has the formula [RₓSiX_{y}O_{z}]ₙ, wherein R is an alkyl or aryl group, X is a functional group bonded to silicon, and wherein z is more than 1 and less than 2. As will be appreciated, n is large so as to provide an oligomer or polymer necessary for a silicone resin, particularly a resin which is solid at room temperature. Whilst dependent on the molecular mass of the R and X groups, an M_{W} of greater than 1,000 may be achieved where n is greater than 10, an M_{W} of greater than 10,000 may be achieved where n is greater than 100 and an M_{W} of greater than 100,000 may be achieved where n is greater than 1,000. Accordingly, n may preferably be greater than 10, greater than 100, greater than 1,000.

As will be appreciated, R is an alkyl or an aryl bonded to silicon and X is a non-hydrocarbon functional group bonded to silicon. Equally, since silicon is a tetravalent atom, it will be appreciated that x + y + 2z = 4. z is less than 2 since where z = 2, x and y = 0 providing silica (i.e., silicon dioxide; (SiO₂)ₙ). Similarly, z is greater than 1 since where z = 1, x + y = 2 providing a substituted polysiloxane (e.g. (RXSiO)ₙ) consisting of "D" units providing a linear resin (e.g. -O-(SiRX)-O-(SiRX)-O-). One example is polydimethylsiloxane. Accordingly, O refers to oxygen bridging two silicon atoms in the polymeric backbone of the silicone resin.

Preferably, 0 < x + y < 2, preferably 0 < x + y ≤ 1.5, preferably 0 < x + y ≤ 1. Preferably, x, y and/or x + y is greater than 0.1, preferably greater than 0.2. In one preferred embodiment, x + y is 1 providing a silicone resin known generally as a polysilsesquioxane. Preferably, y is less than 1 and/or y is less than x. Even more preferably, 2y ≤ x, preferably 5y ≤ x, preferably 10y ≤ x. In one embodiment, y is 0. For example, y is 0 where the polysilsesquioxane is a polyalkylsilsesquioxane such as polymethylsilsesquioxane (MeSiO_{3/2})ₙ.

Typically, where present, X is one or more of H, hydroxy (OH), Cl and C₁-C₆ alkoxy, preferably one or more of OH and C₁-C₆ alkoxy, preferably wherein the C₁-C₆ alkoxy is selected from methoxy (OCH₃) and ethoxy (OCH₂CH₃). In a particularly preferred embodiment, X is one or both of OH and ethoxy. However, X is a functional group which can also be a reactive functional group such as aminyl (NH₂, NR₂), epoxy, acrylate, and vinyl, though these are less preferred since the presence of hydroxy or alkoxy groups is believed to provide more effective cross-linking during calcination. As described above, any oxygen present in the terminal functional group does not contribute to "O_{z}" in the above formula which refers to silicon bridging oxygen atoms.

The inventors have found that the silicone resins described herein provide a coated monolith article with the advantageous benefit of enhanced water tolerance and improved thermal stability. The silicone resin has been found to be particularly advantageous in binding the inorganic particles to the monolith article. Without wishing to be bound by theory, the inventors believe that the branched structure and the physical properties of the silicone resin permit the resin, during the calcination step as described herein, to first melt and begin to cure after having been combined with the inorganic particles on the gas-contacting surface of the channels (either intimately or deposited thereon). As the resin cures, the resin forms additional -Si-O-Si-O-Si- bridges/bonds further increasing its branch-like structure. Additionally, the inventors believe that such bonds may also be formed with the gas-contacting surface (i.e., the monolith article itself) along with the inorganic particles further cementing the particles in place in the article, for example by forming -Si-O-AI- bonds. As the temperature during calcination continues to increase, the R and X groups are oxidised to leave a silica (SiO₂) framework. Accordingly, silicon and/or aluminium containing inorganic particles may be preferred, for example, zeolites, calcium aluminate, alumina and/or silica.

Preferably, the silicone resin has a degree of crosslinking of greater than 55%, preferably greater than 60%, more preferably greater than 65%, and/or a degree of crosslinking of less than 85%, preferably less than 80%.

As described herein, the silicon atom(s) of a silicone resin, such as that described by the formula [RₓSiX_{y}O_{z}]ₙ, may be in one of four coordination environments in view of the tetravalent nature of silicon, i.e., SiO(R/X)₃, SiO₂(R/X)₂, SiO₃(R/X) or SiO₄ known in the art as "M", "D", "T", and "Q", respectively. Accordingly, the above formula may be described by aMbDcTdQ where a + b + c + d = 1 and the degree of crosslinking is defined by [(a + 2b + 3c + 4d) / 4] * 100. The relative ratios of the number of silicon atoms in each coordination environment may be determined using standard spectroscopic techniques, for example, multi-nuclear NMR spectroscopy, particularly ²⁹Si NMR spectroscopy. Alternatively, for commercially available silicone resins, the degree of crosslinking may be provided in the technical datasheet.

In other words, silicon dioxide (SiO₂) is formed entirely of "Q" SiO₄ units where each silicon atom is bonded to four connecting oxygen atoms. Accordingly, where d is 1, this gives silicon dioxide a 100% degree of crosslinking. On the other hand, by way of example, PDMS is formed entirely of "D" Si(Me)₂O₂. Accordingly, where b is 1, this gives polydimethylsiloxane a 50% degree of crosslinking. Consequently, silicone resins preferably have a degree of crosslinking between these two extremes and comprise a mixture of such units. Accordingly, a silicone resin may preferably consist of MDT units, MTQ units, DTQ units or DT units.

Preferably, R is one or more of C₁-C₆ alkyl or phenyl group. Due to the oligomeric or polymeric nature of a silicone resin, the number of monomeric units is typically large. There may be numerous instances of both R and X groups such that the silicon resin, as described by a single monomeric unit, may comprise multiple different groups. As described above with regards to the functional group X, X may preferably be both OH and ethoxy. Similarly, R may comprise more than one C₁-C₆ alkyl and/or phenyl. Accordingly, where R is described by more than one group such as R' and R", the formula of the silicon resin may be [R'_{x'}R"_{x"}SiX_{y}O_{z}]ₙ wherein x' + x" = x. This applies equally to the functional group X.

Preferably, R is one or more of a straight chain or branched alkyl and phenyl, one or more of a straight chain alkyl and phenyl, more preferably one or both of methyl and phenyl. In some preferred embodiments wherein R is both methyl and phenyl, the phenyl to methyl ratio is less than 2, preferably less than 1.5, preferably less than 1, preferably less than 0.5. In some embodiments, R is phenyl. More preferably, R is methyl (i.e., the ratio is 0).

Smaller organic groups such as methyl, methoxy and ethoxy for the R and X groups are particularly preferred since this increases the SiO₂ content of the starting silicone resin reducing the weight loss during calcination. Additionally, there is reduced smoking during calcination and loss of volatiles (such as H₂O, CO₂ and other volatile organics).

Accordingly, it is preferred that the silicon dioxide content of the silicone resin is greater than 50 wt%, preferably greater than 60 wt%, preferably greater than 70 wt%, preferably greater than 80 wt%. The silicon dioxide content may also be referred to as the ash content which is the weight of the product remaining after complete oxidation (in this case the product being silicon dioxide) by weight of the starting silicone resin. For example, the oxidation may be carried out at 1000°C. Alternatively, the silicone dioxide content may be available from the technical datasheet of suitable commercially available silicone resins. Alternatively, the silicon dioxide content may be calculated on the basis of complete oxidation of silicon to silicon dioxide and the resin chemical formula. By way of example only, polymethylsilsesquioxane (MeSiO_{3/2})ₙ is about 42.7 wt% silicon, by weight of the silicone resin based on a formula weight of 66.1 and silicon's atomic weight of 28.1. Silicon dioxide has a formula weight of 60.1 which is about 2.1 times greater than that of silicon. Accordingly, the silicon dioxide content of polymethylsilsesquioxane is 2.1 * 42.7 = 89.7 wt% (i.e., by weight of the silicone resin).

One particularly preferred silicone resin for use in the method of the present invention is a highly cross-linked ethoxylated poly(dimethyl siloxane) having silicon dioxide content of about 82 wt%, and a melting point of from 35°C to 55°C.

The method further comprises calcining the coating layer to provide a coated monolith article. That is, the method comprises calcining the porous monolithic article having the inorganic particles and silicone resin sprayed thereon on the gas-contacting surfaces of the plurality of channels.

Preferably, the step of calcining comprises heating to a temperature of at least 200°C, preferably at least 300°C, more preferably at least 400°C, and/or a temperature of at most 600°C, preferably at most 550°C, more preferably at most 530°C. Accordingly, calcining preferable comprises heating to a temperature of from 200°C to 600°C, preferably from 300°C to 550°C, preferably from 400°C to 530°C, more preferably from 400°C to 500°C, even more preferably from 400°C to 450°C.

Such temperatures have been found as most suitable for forming an effective binder which provides the coated monolith article with its advantageous water tolerance. Such temperatures are particularly advantageous when the porous monolith article is a catalyst article, such as a catalytic wall-flow filter, since these temperatures allow for calcination of the silicone resin into a cross-linked silicon dioxide without negatively impacting the catalytic efficiency (i.e., without degrading the catalyst article). It is believed that linear siloxanes such as PDMS, not only do not provide the required branching to effectively bind the inorganic particles and adhere to the article, complete degradation to SiO₂ requires temperatures in excess of 550°C or even 600°C. Ideally, calcination temperatures are kept as low as possible to reduce the likelihood of affecting catalytic activity of any catalyst present in the monolithic article.

In another aspect, there is provided an uncalcined porous monolith article for use in forming a monolith article for the treatment of an exhaust gas, the uncalcined porous monolith article comprising a plurality of channels and comprising a dry particulate composition comprising inorganic particles comprising an aluminosilicate zeolite having a mean pore diameter Dv50 of between 0.5 and 3.0 µm and a silicone resin, the dry particulate composition being located within the channels and/or pores of said uncalcined porous monolith.

In another aspect, there is provided an uncalcined porous monolith article for use in forming a monolith article for the treatment of an exhaust gas, the monolith article obtainable by a method comprising:
providing a porous monolith article comprising a plurality of channels for the passage of an exhaust gas, each channel having a gas-contacting surface;
spraying onto the gas-contacting surface, as a dry particulate aerosol, inorganic particles comprising an aluminosilicate zeolite having a mean pore diameter Dv50 of between 0.5 and 3.0 µm and a silicone resin to form a coating layer.

Thus, the uncalcined porous monolith article is suitable for use in forming a monolith article which may be used for the treatment of an exhaust gas. Preferably, the uncalcined porous monolith article is for use in forming a monolith article, preferably wherein the monolith article is to be used for the treatment of an exhaust gas. The uncalcined porous monolith article comprises a plurality of channels and comprises a dry particulate composition comprising inorganic particles comprising an aluminosilicate zeolite having a mean pore diameter Dv50 of between 0.5 and 3.0 µm and a silicone resin, as described herein in respect of the first aspect. The dry particulate composition is located within the channels and/or pores of the uncalcined porous monolith, that is, the composition coats a gas-contacting surface of the channels.

The uncalcined porous monolith article comprising the dry particulate composition may be formed into a monolith article by calcination thereby decomposing the silicone resin of the dry particulate composition into silicon dioxide, preferably by heating to a temperature as described herein.

Preferably, the mass loading of the dry particulate composition in the uncalcined porous monolith article is less than 50 g/L, preferably less than 30 g/L. Preferably, the mass loading of the inorganic particles in the uncalcined porous monolith article is at least 5 g/L and/or less than 25 g/L. Preferably, the mass loading of the silicone resin in the uncalcined porous monolith article is at least 5 g/L and/or less than 25 g/L. In one preferred embodiment, the mass loading of the inorganic particles in the uncalcined porous monolith article is from 5 g/L to 15 g/L and/or the mass loading of the silicone resin is from 5 g/L to 15 g/L. By way of example, where the ratio of inorganic particles to silicone resin, by weight, is 1:1, the loading of inorganic particles may be 10 g/L and the loading of the silicone resin may be 10 g/L giving a total loading of the dry particulate composition of 20 g/L. By way of example, where the ratio is 2:1, the inorganic particle loading may be 10 g/L and the silicone resin loading 5 g/L giving a total loading of 15 g/L.

In another aspect, there is provided an uncalcined porous monolith article for use in forming a monolith article for the treatment of an exhaust gas, the monolith article obtainable by a method comprising:
providing a porous monolith article comprising a plurality of channels for the passage of an exhaust gas, each channel having a gas-contacting surface;
spraying onto the gas-contacting surface, as a dry particulate aerosol, inorganic particles comprising an aluminosilicate zeolite having a mean pore diameter Dv50 of between 0.5 and 3.0 µm and a silicone resin to form a coating layer.

In another aspect, there is provided a coated monolith article for the treatment of an exhaust gas obtainable by the method as described herein in respect of the first aspect.

In another aspect of the present invention, there is provided a vehicular exhaust system comprising the coated monolith article.

### EXAMPLES

### Comparative Sample A

A GPF filter having a 75 g/L washcoat loading was prepared from a cordierite substrate, 300/8, 1.68 L type by following the procedure of Example 1 of US20200306692A1.

The inlet channels of the GPF filter was then loaded with a mixture of a Beta zeolite powder (SAR = 500, Dv10 = 0.56 µm, Dv50 = 2.6 µm, Dv90 = 37.8 µm) and a highly cross-linked ethoxylated poly(dimethyl siloxane) powder (silicon dioxide content of 82 wt%, melting point of from 35°C to 55°C, Dv90 = 5 µm) at a weight ratio of 3:1. The powder loading was 13 g/L prior to calcination. The powder mixture was loaded following the method and apparatus described in WO 2021028692A1. A primary gas flow of 300 m³/h of air was pulled through the filter using a downstream regenerative blower. Back pressure was monitored with a Wika^{®} P30 pressure transmitter located below the filter. The powder was dispersed into the primary gas flow using a fixed nozzle with a 2-mm fluid cap with a 0.5-mm clearance air cap. Compressed air is supplied at 4 bar to the nozzle and positioned 500 mm from inlet face. The back pressure was used to determine the point of stopping of spraying of the powder mixture. After loading was completed the filter was calcined at 530°C for 35 minutes.

### Comparative Sample B

Sample B was prepared in the same way as Comparative Sample A, except that it is loaded with a mixture of a Y zeolite powder (SAR = 500, Dv10 = 0.485 µm, Dv50 = 1.12 µm, Dv90 = 2.41 µm) and a highly cross-linked ethoxylated poly(dimethyl siloxane) powder (silicon dioxide content of 82 wt%, melting point of from 35°C to 55°C, Dv90 = 5 µm) at a weight ratio of 3:1. The powder loading was 11 g/L prior to calcination.

### Sample C

Sample C was prepared in the same way as Comparative Sample A, except that it is loaded with a mixture of a Y zeolite (FAU framework) powder (SAR = 100, Dv10 = 0.92 µm, Dv50 = 1.81 µm, Dv90 = 4.46 µm) and a highly cross-linked ethoxylated poly(dimethyl siloxane) powder (silicon dioxide content of 82 wt%, melting point of from 35°C to 55°C, Dv90 = 5 µm) at a weight ratio of 3:1. The powder loading was 12 g/L prior to calcination.

### Filtration Test

Samples were tested on an engine bench on an RDE cycle for filtration efficiency, both fresh and after hydrothermal ageing, where the filter samples were subjected an atmosphere containing 2 wt% oxygen, 10 wt% water, 88 wt% nitrogen at 1050°C, for 4 h. The test results are listed in Table 1. The filtration efficiency in Table 1 is the soot particulates removed over the entire drive cycle.

**Table 1**

| Sample | Powder Mixture | Powder loading (g/L) | SAR of zeolite | Zeolite particle size Dv50 (µm) | Fresh engine filtration efficiency (%) | 1050°C Hydrothermally aged engine filtration efficiency (%) |
|---|---|---|---|---|---|---|
| Comparative Sample A | Beta Zeolite + Silicone resin | 13 | 500 | 2.6 | 97.4 | - |
| Comparative Sample B | Y Zeolite + Silicone resin | 11 | 500 | 1.1 | 98.9 | 97.7 |
| Sample C | Y Zeolite + Silicone resin | 12 | 100 | 1.8 | 99.4 | 99.1 |

The results show improved fresh and hydrothermally aged filtration efficiency for Sample C compared to Comparative Sample A and B.

In this specification the term "dry powder" refers to a particulate composition that is not suspended or dissolved in a liquid. It is not meant to necessarily imply a complete absence of all water molecules. The dry powder is preferably free-flowing.

In this specification the term "tapped density" refers to the tapped density of the powder as measured according to Method 1 of Section 2.9.35 of European Pharmacopoeia 7.0 with 1250 taps.

In this specification the term "g/L" (grams per litre) refers to the mass of dry powder divided by the volume of the filter.

In this specification the terms "loading" and "mass loading" when referencing the quantity of powder, refer to the mass of powder added to a filter and may be measured by weighing the filter before and after application of the powder to the filter.

In this specification the term "d₅₀ (by volume)" refers to a d₅₀ (by volume) measurement as measured by a Malvern Mastersizer^{®} 3000 with Aero s dispersion unit, available from Malvern Panalytical Ltd, Malvern, UK. Dispersion conditions: Air pressure = 2 barg, feed rate = 65%, hopper gap = 1.2 mm. Refractive index and absorbtion parameters set in accordance with instructions provided in the Malvern Mastersizer^{®} 3000 User Manual.

As used herein, the singular form of "a", "an" and "the" include plural references unless the context clearly dictates otherwise. The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise.

The foregoing detailed description has been provided by way of explanation and illustration, and is not intended to limit the scope of the appended claims. Many variations of the presently preferred embodiments illustrated herein will be apparent to one of ordinary skill in the art, and remain within the scope of the appended claims and their equivalents.

## Claims

1. A method of forming an inorganic oxide coating on a monolith article for the treatment of an exhaust gas, the method comprising:
providing a porous monolith article comprising a plurality of channels for the passage of an exhaust gas, each channel having a gas-contacting surface;
spraying onto the gas-contacting surface, as a dry particulate aerosol, inorganic particles comprising an aluminosilicate zeolite having a mean pore diameter Dv50 of between 0.5 and 3.0 µm and a silicone resin to form a coating layer; and
calcining the coating layer to provide a coated monolith article.

2. The method according to claim 1, wherein the Dv50 of the aluminosilicate is between 1.1 and 1.8 µm, preferably between 1.2 and 1.6 µm.

3. The method according to claim 1, wherein the aluminosilicate has a silica-to-alumina molar ratio (SAR) of between 10 to 200, preferably between 15 to 100, or more preferably between 20 to 80.

4. The method according to claim 1, wherein the aluminosilicate has a framework selected from the group consisting of AEI, BEA, CHA, MFI, and FAU, preferably the aluminosilicate has FAU framework.

5. The method according to claim 1, wherein the monolith article is a monolith filter, preferably a wall-flow filter, and/or a catalyst article, preferably a catalytic wall-flow filter.

6. The method according to any preceding claim, wherein either:
(i) the inorganic particles are sprayed onto the gas-contacting surface as a first dry particulate aerosol to form an inorganic particle layer and the silicone resin is then sprayed onto the inorganic particle layer as a second dry particulate aerosol to form the coating layer; or
(ii) a mixture of the inorganic particles and silicone resin is sprayed onto the gas-contacting surface as a dry particulate aerosol to form the coating layer.

7. The method according to any preceding claim, wherein the silicone resin has a molecular weight of greater than 1,000, preferably greater than 2,000, preferably greater than 5,000, preferably greater than 10,000, and/or a molecular weight of less than 500,000, preferably less than 200,000.

8. The method according to any preceding claim, wherein the silicone resin has a glass transition temperature (Tg) of greater than 30°C, preferably greater than 35°C, and/or less than 100°C, preferably less than 80°C.

9. The method according to any preceding claim, wherein the silicone resin has the formula [RₓSiX_{y}O_{z}]ₙ, wherein R is an alkyl or aryl, X is a functional group bonded to silicon, and wherein z is more than 1 and less than 2.

10. The method according to claim 9, wherein y is less than 1 and/or wherein y is less than x.

11. The method according to claim 9 or claim 10, wherein the silicone resin has a degree of crosslinking of greater than 55%, preferably greater than 60%, more preferably greater than 65%, and/or a degree of crosslinking of less than 85%, preferably less than 80%.

12. The method according to any of claims 9 to 11, wherein R is one or more of C₁-C₆ alkyls and phenyl, preferably one or more of a straight chain alkyl and phenyl, preferably one or both of methyl and phenyl, more preferably methyl.

13. The method according to any of claims 9 to 12, wherein X is one or more of H, OH, Cl and C₁-C₆ alkoxy, preferably one or more of OH and C₁-C₆ alkoxy, more preferably one or both of OH and ethoxy.

14. The method according to any preceding claim, wherein the silicon dioxide content of the silicone resin is greater than 50 wt%, preferably greater than 60 wt%, preferably greater than 70 wt%, preferably greater than 80 wt%.

15. The method according to any preceding claim, wherein the aluminosilicate zeolite is present in the inorganic particles in an amount of from 10 to 99 wt%, preferably in the amount of from 50 to 99 wt%, more preferably in the amount of from 80 to 99 wt%, and most preferably in the amount of from 90 to 99 wt%.

16. The method according to any preceding claim, wherein the silicone resin has a Dv50 of between 0.3 and 40 µm, preferably between 0.4 and 30 µm, more preferably between 0.5 and 20 µm.

17. The method according to any preceding claim, wherein calcining comprises heating to a temperature of at least 200°C, preferably at least 300°C, more preferably at least 400°C, and/or a temperature of at most 600°C, preferably at most 550°C, more preferably at most 530°C.

18. The method according to any preceding claim, wherein the monolith article comprises one or more platinum group metals.

19. The method according to any preceding claim, wherein the dry particulate aerosol is formed from a dry particulate composition having a tapped density of less than 1.5 g/cm³.

20. The method according to any preceding claim, wherein a mixture of the inorganic particles and silicone resin is sprayed onto the gas-contacting surface as a dry particulate aerosol to form the coating layer, and wherein in the mixture, the ratio of inorganic particles to silicone resin, by weight, is greater than 0.5, preferably greater than 0.7, preferably greater than 0.9, and/or less than 4, preferably less than 3, preferably less than 2.5.

21. An uncalcined porous monolith article for use in forming a monolith article for the treatment of an exhaust gas, the uncalcined porous monolith article comprising a plurality of channels and comprising a dry particulate composition comprising inorganic particles comprising an aluminosilicate zeolite having a mean pore diameter Dv50 of between 0.5 and 3.0 µm and a silicone resin, the dry particulate composition being located within the channels and/or pores of said uncalcined porous monolith.

22. The uncalcined porous monolith article according to claim 21, wherein the mass loading of the dry particulate composition is less than 50 g/L, preferably less than 30 g/L.

23. An uncalcined porous monolith article for use in forming a monolith article for the treatment of an exhaust gas, the monolith article obtainable by a method comprising:
providing a porous monolith article comprising a plurality of channels for the passage of an exhaust gas, each channel having a gas-contacting surface;
spraying onto the gas-contacting surface, as a dry particulate aerosol, inorganic particles comprising an aluminosilicate zeolite having a mean pore diameter Dv50 of between 0.5 and 3.0 µm and a silicone resin to form a coating layer.

24. A coated monolith article for the treatment of an exhaust gas obtainable by the method of any of claims 1 to 19.

25. A vehicular exhaust system comprising the coated monolith article according to claim 24.
